# EUROPEAN PATENT APPLICATION

(11) **EP 4 258 011 A1**
(43) Date of publication of application: **11.10.2023**
(21) Application number: 23166160.4
(22) Date of filing: 31.03.2023
(51) Int. Cl.: G01S 7/42, G01S 7/48, G01S 17/86, G01S 17/89, G06T 7/33, G06T 7/73

(54) **IMAGE-BASED SCAN PRE-REGISTRATION**

(30) Priority: 04.04.2022 US 202263327146 P
(71) Applicant: Faro Technologies, Inc., Lake Mary, FL 32746-6204 (US)
(72) Inventor: MÜLLER, Michael, 70825 Korntal-Münchingen (DE)
(74) Representative: McNamara, Kathryn

(57) **Abstract**

Examples described herein provide a method that includes receiving, from a camera, a first image captured at a first location of an environment. The method further includes receiving, by a three-dimensional (3D) coordinate measurement device, first 3D coordinate data captured at the first location of the environment. The method further includes receiving, from the camera, a second image captured at a second location of the environment. The method further includes detecting, by a processing system, first features of the first image and second features of the second image. The method further includes determining, by the processing system, whether a correspondence exists between the first image and the second image. The method further includes, responsive to determining that the correspondence exists between the first image and the second image, causing the 3D coordinate measurement device to capture, at the second location, second 3D coordinate data.

## Description

### CROSS-REFERENCE TO RELATED APPLICATIONS

The present application claims the benefit of, and priority to, United States Provisional Application Serial No. 63/327,146 filed on April 4, 2022, the contents of which is incorporated by reference herein.

### BACKGROUND

The subject matter disclosed herein relates to use of a device for capturing three-dimensional (3D) data. Examples of such devices for capturing 3D data include a 3D coordinate measurement device, such as a 3D laser scanner time-of-flight (TOF) coordinate measurement device, a light detection and ranging (LIDAR) device, etc.), a mobile mapping device, and/or the like, including combinations and/or multiples thereof. A 3D laser scanner device steers a beam of light to a non-cooperative target such as a diffusely scattering surface of an object. A distance meter in the device measures a distance to the object, and angular encoders measure the angles of rotation of two axles in the device. The measured distance and two angles enable a processor in the device to determine the 3D coordinates of the target.

A TOF laser scanner is a scanner in which the distance to a target point is determined based on the speed of light in air between the scanner and a target point. Laser scanners are typically used for scanning closed or open spaces such as interior areas of buildings, industrial installations and tunnels. They may also be used, for example, in industrial applications and accident reconstruction applications. A laser scanner optically scans and measures objects in a volume around the scanner through the acquisition of data points representing object surfaces within the volume. Such data points are obtained by transmitting a beam of light onto the objects and collecting the reflected or scattered light to determine the distance, two-angles (i.e., an azimuth and a zenith angle), and optionally a gray-scale value. This raw scan data is collected, stored and sent to a processor or processors to generate a 3D image representing the scanned area or object.

Generating an image requires at least three values for each data point. These three values may include the distance and two angles, or may be transformed values, such as the x, y, z coordinates. In an embodiment, an image is also based on a fourth gray-scale value, which is a value related to irradiance of scattered light returning to the scanner.

Most TOF scanners direct the beam of light within the measurement volume by steering the light with a beam steering mechanism. The beam steering mechanism includes a first motor that steers the beam of light about a first axis by a first angle that is measured by a first angular encoder (or another angle transducer). The beam steering mechanism also includes a second motor that steers the beam of light about a second axis by a second angle that is measured by a second angular encoder (or another angle transducer).

Many contemporary laser scanners include a camera mounted on the laser scanner for gathering camera digital images of the environment and for presenting the camera digital images to an operator of the laser scanner. By viewing the camera images, the operator of the scanner can determine the field of view of the measured volume and adjust settings on the laser scanner to measure over a larger or smaller region of space. In addition, the camera digital images may be transmitted to a processor to add color to the scanner image. To generate a color scanner image, at least three positional coordinates (such as x, y, z) and three color values (such as red, green, blue "RGB") are collected for each data point.

Accordingly, while existing 3D scanners are suitable for their intended purposes, what is needed is a 3D scanner having certain features of embodiments described herein.

### BRIEF DESCRIPTION

In one exemplary embodiment, a method is provided. The method includes receiving, from a camera, a first image captured at a first location of an environment. The method further includes receiving, by a three-dimensional (3D) coordinate measurement device, first 3D coordinate data captured at the first location of the environment. The method further includes receiving, from the camera, a second image captured at a second location of the environment. The method further includes detecting, by a processing system, first features of the first image and second features of the second image. The method further includes determining, by the processing system, whether a correspondence exists between the first image and the second image. The method further includes, responsive to determining that the correspondence exists between the first image and the second image, causing the 3D coordinate measurement device to capture, at the second location, second 3D coordinate data.

In addition to one or more of the features described herein, or as an alternative, further embodiments of the method may include, responsive to determining that the correspondence does not exist between the first image and the second image: receiving, from the camera, a third image captured at third location of the environment; detecting, by the processing system, third features of the third image; determining, by the processing system, whether a correspondence exists between the first image and the third image; and responsive to determining that the correspondence exists between the first image and the third image, causing the 3D coordinate measurement device to capture, at the third location, third 3D coordinate data.

In addition to one or more of the features described herein, or as an alternative, further embodiments of the method may include that the 3D coordinate measurement device is a laser scanner.

In addition to one or more of the features described herein, or as an alternative, further embodiments of the method may include that the first 3D coordinate data is captured prior to capturing the first image.

In addition to one or more of the features described herein, or as an alternative, further embodiments of the method may include that the second 3D coordinate data is captured subsequent to capturing the second image.

In addition to one or more of the features described herein, or as an alternative, further embodiments of the method may include that the first 3D coordinate data is captured prior to capturing the first image and wherein the second 3D coordinate data is captured subsequent to capturing the second image.

In addition to one or more of the features described herein, or as an alternative, further embodiments of the method may include, subsequent to receiving the first 3D coordinate data and the second 3D coordinate data, performing registration on the first 3D coordinate data and the second 3D coordinate data.

In addition to one or more of the features described herein, or as an alternative, further embodiments of the method may include that the 3D coordinate measurement device comprises the camera.

In addition to one or more of the features described herein, or as an alternative, further embodiments of the method may include that the camera is a panoramic camera.

In addition to one or more of the features described herein, or as an alternative, further embodiments of the method may include that the first image and the second image are two-dimensional (2D) images.

In addition to one or more of the features described herein, or as an alternative, further embodiments of the method may include that the first image and the second image are 3D images.

In addition to one or more of the features described herein, or as an alternative, further embodiments of the method may include that the camera and the 3D coordinate measurement device are disposed in a body.

In addition to one or more of the features described herein, or as an alternative, further embodiments of the method may include that the camera is disposed in a first body and wherein the 3D coordinate measurement device is disposed in a second body separate from the first body.

In addition to one or more of the features described herein, or as an alternative, further embodiments of the method may include that the first body is connected to the second body.

In addition to one or more of the features described herein, or as an alternative, further embodiments of the method may include that determining the correspondence is based at least in part on a threshold number of detected features.

In addition to one or more of the features described herein, or as an alternative, further embodiments of the method may include that determining the correspondence is based at least in part on a percentage of overlap between the first image and the second image.

In addition to one or more of the features described herein, or as an alternative, further embodiments of the method may include that determining the correspondence is based at least in part on an angular difference between the first image and the second image.

In another exemplary embodiment, a method is provided. The method includes capturing a first image at first location of an environment. The method further includes capturing a second image at second location of the environment. The method further includes detecting, by a processing system, features of the first image and the second image. The method further includes determining, by the processing system, whether a correspondence exists between the first image and the second image based at least in part on the features. The method further includes, responsive to determining that the correspondence exists between the first image and the second image, capturing, at the first location, first three-dimensional (3D) coordinate data by a 3D coordinate measurement device and capturing, at the second location, second 3D coordinate data by the 3D coordinate measurement device.

In addition to one or more of the features described herein, or as an alternative, further embodiments of the system may include that the first image and the second image are captured by a camera physically connected to the 3D coordinate measurement device.

In addition to one or more of the features described herein, or as an alternative, further embodiments of the system may include, responsive to determining that the correspondence does not exist between the first image and the second image: capturing, at third location of the environment, a third image of the environment; detecting, by the processing system, third features of the third image; determining, by the processing system, whether a correspondence exists between the first image and the third image; and responsive to determining that the correspondence exists between the first image and the third image, capturing, at the first location, the first 3D coordinate data by the 3D coordinate measurement device and capturing, at the third location, third 3D coordinate data by the 3D coordinate measurement device.

Other embodiments described herein implement features of the above-described methods in computer systems and computer program products.

The above features and advantages, and other features and advantages, of the disclosure are readily apparent from the following detailed description when taken in connection with the accompanying drawings.

### BRIEF DESCRIPTION OF DRAWINGS

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIG. 1 is a perspective view of a laser scanner according to one or more embodiments described herein;
FIG. 2 is a side view of the laser scanner illustrating a method of measurement according to one or more embodiments described herein;
FIG. 3 is a schematic illustration of the optical, mechanical, and electrical components of the laser scanner according to one or more embodiments described herein;
FIG. 4 is a schematic illustration of the laser scanner of FIG. 1 according to one or more embodiments described herein;
FIG. 5A is a schematic illustration of a processing system for image-based scan pre-registration according to one or more embodiments described herein;
FIG. 5B is a schematic illustration of an environment according to one or more embodiments described herein.
FIG. 6 depicts images according to one or more embodiments described herein;
FIG. 7A is a flow diagram of a method for image-based scan pre-registration according to one or more embodiments described herein;
FIG. 7B is a flow diagram of a method for image-based scan pre-registration according to one or more embodiments described herein; and
FIG. 8 is a schematic illustration of a processing system for implementing the presently described techniques according to one or more embodiments described herein.

The detailed description explains embodiments of the disclosure, together with advantages and features, by way of example with reference to the drawings.

### DETAILED DESCRIPTION

Embodiments described herein provide for image-based scan pre-registration.

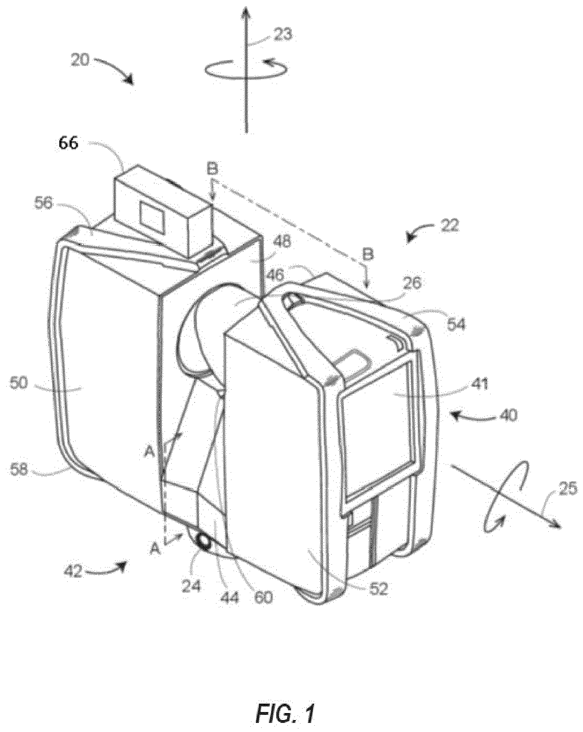

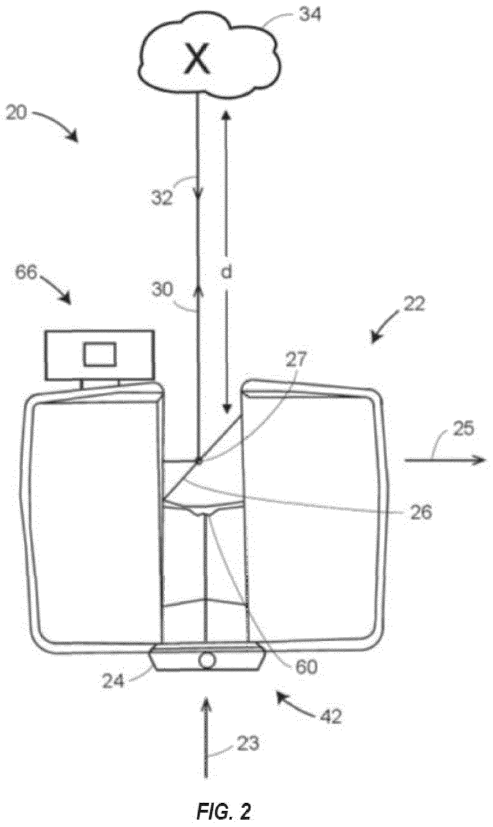

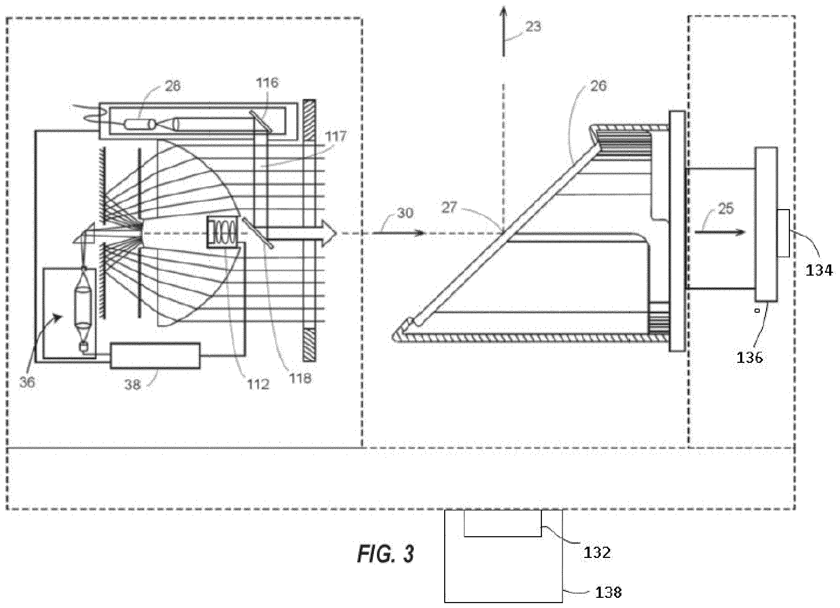

It may be desirable to capture three-dimensional (3D) data about an environment such as warehouses, factories, manufacturing facilities, maintenance orc utility facilities, accident or crime scenes, construction sites, buildings, houses, and/or the like. One or more embodiments described herein utilize 3D coordinate measurement devices, which may include, for example, a laser scanner. It should be appreciated that while embodiments herein describe the 3D coordinate measurement device as being a laser scanner, this is for example purposes and the claims should not be so limited. In other embodiments, the 3D coordinate measurement device may be another type of system that measures a plurality of points on surfaces (i.e., generates a point cloud), such as but not limited to a triangulation scanner, a structured light scanner, or a photogrammetry device for example. An example of a laser scanner is now described with reference to FIGS. 1-4.

Particularly, referring now to FIGS. 1-3, a 3D coordinate measurement device, such as a laser scanner 20, is shown for optically scanning and measuring the environment surrounding the laser scanner 20 according to one or more embodiments described herein. The laser scanner 20 has a measuring head 22 and a base 24. The measuring head 22 is mounted on the base 24 such that the laser scanner 20 may be rotated about a vertical axis 23. In one embodiment, the measuring head 22 includes a gimbal point 27 that is a center of rotation about the vertical axis 23 and a horizontal axis 25. The measuring head 22 has a rotary mirror 26, which may be rotated about the horizontal axis 25. The rotation about the vertical axis may be about the center of the base 24. The terms vertical axis and horizontal axis refer to the scanner in its normal upright position. It is possible to operate a 3D coordinate measurement device on its side or upside down, and so to avoid confusion, the terms azimuth axis and zenith axis may be substituted for the terms vertical axis and horizontal axis, respectively. The term pan axis or standing axis may also be used as an alternative to vertical axis.

The measuring head 22 is further provided with an electromagnetic radiation emitter, such as light emitter 28, for example, that emits an emitted light beam 30. In one embodiment, the emitted light beam 30 is a coherent light beam such as a laser beam. The laser beam may have a wavelength range of approximately 300 to 1600 nanometers, for example 790 nanometers, 905 nanometers, 1550 nm, or less than 400 nanometers. It should be appreciated that other electromagnetic radiation beams having greater or smaller wavelengths may also be used. The emitted light beam 30 is amplitude or intensity modulated, for example, with a sinusoidal waveform or with a rectangular waveform. The emitted light beam 30 is emitted by the light emitter 28 onto a beam steering unit, such as mirror 26, where it is deflected to the environment. A reflected light beam 32 is reflected from the environment by an object 34. The reflected or scattered light is intercepted by the rotary mirror 26 and directed into a light receiver 36. The directions of the emitted light beam 30 and the reflected light beam 32 result from the angular positions of the rotary mirror 26 and the measuring head 22 about the axes 25 and 23, respectively. These angular positions in turn depend on the corresponding rotary drives or motors.

Coupled to the light emitter 28 and the light receiver 36 is a controller 38. The controller 38 determines, for a multitude of measuring points X, a corresponding number of distances d between the laser scanner 20 and the points X on object 34. The distance to a particular point X is determined based at least in part on the speed of light in air through which electromagnetic radiation propagates from the device to the object point X. In one embodiment the phase shift of modulation in light emitted by the laser scanner 20 and the point X is determined and evaluated to obtain a measured distance d.

The speed of light in air depends on the properties of the air such as the air temperature, barometric pressure, relative humidity, and concentration of carbon dioxide. Such air properties influence the index of refraction *n* of the air. The speed of light in air is equal to the speed of light in vacuum c divided by the index of refraction. In other words, *c*ₐᵢᵣ = *c*/*n.* A laser scanner of the type discussed herein is based on the time-of-flight (TOF) of the light in the air (the round-trip time for the light to travel from the device to the object and back to the device). Examples of TOF scanners include scanners that measure round trip time using the time interval between emitted and returning pulses (pulsed TOF scanners), scanners that modulate light sinusoidally and measure phase shift of the returning light (phase-based scanners), as well as many other types. A method of measuring distance based on the time-of-flight of light depends on the speed of light in air and is therefore easily distinguished from methods of measuring distance based on triangulation. Triangulation-based methods involve projecting light from a light source along a particular direction and then intercepting the light on a camera pixel along a particular direction. By knowing the distance between the camera and the projector and by matching a projected angle with a received angle, the method of triangulation enables the distance to the object to be determined based on one known length and two known angles of a triangle. The method of triangulation, therefore, does not directly depend on the speed of light in air.

In one mode of operation, the scanning of the volume around the laser scanner 20 takes place by rotating the rotary mirror 26 relatively quickly about axis 25 while rotating the measuring head 22 relatively slowly about axis 23, thereby moving the assembly in a spiral pattern. In an exemplary embodiment, the rotary mirror rotates at a maximum speed of 5820 revolutions per minute. For such a scan, the gimbal point 27 defines the origin of the local stationary reference system. The base 24 rests in this local stationary reference system.

In addition to measuring a distance d from the gimbal point 27 to an object point X, the laser scanner 20 may also collect gray-scale information related to the received optical power (equivalent to the term "brightness.") The gray-scale value may be determined at least in part, for example, by integration of the bandpass-filtered and amplified signal in the light receiver 36 over a measuring period attributed to the object point X.

The measuring head 22 may include a display device 40 integrated into the laser scanner 20. The display device 40 may include a graphical touch screen 41, as shown in FIG. 1, which allows the operator to set the parameters or initiate the operation of the laser scanner 20. For example, the screen 41 may have a user interface that allows the operator to provide measurement instructions to the device, and the screen may also display measurement results.

The laser scanner 20 includes a carrying structure 42 that provides a frame for the measuring head 22 and a platform for attaching the components of the laser scanner 20. In one embodiment, the carrying structure 42 is made from a metal such as aluminum. The carrying structure 42 includes a traverse member 44 having a pair of walls 46, 48 on opposing ends. The walls 46, 48 are parallel to each other and extend in a direction opposite the base 24. Shells 50, 52 are coupled to the walls 46, 48 and cover the components of the laser scanner 20. In the exemplary embodiment, the shells 50, 52 are made from a plastic material, such as polycarbonate or polyethylene for example. The shells 50, 52 cooperate with the walls 46, 48 to form a housing for the laser scanner 20.

On an end of the shells 50, 52 opposite the walls 46, 48 a pair of yokes 54, 56 are arranged to partially cover the respective shells 50, 52. In the exemplary embodiment, the yokes 54, 56 are made from a suitably durable material, such as aluminum for example, that assists in protecting the shells 50, 52 during transport and operation. The yokes 54, 56 each includes a first arm portion 58 that is coupled, such as with a fastener for example, to the traverse 44 adjacent the base 24. The arm portion 58 for each yoke 54, 56 extends from the traverse 44 obliquely to an outer corner of the respective shell 50, 52. From the outer corner of the shell, the yokes 54, 56 extend along the side edge of the shell to an opposite outer corner of the shell. Each yoke 54, 56 further includes a second arm portion that extends obliquely to the walls 46, 48. It should be appreciated that the yokes 54, 56 may be coupled to the traverse 42, the walls 46, 48 and the shells 50, 54 at multiple locations.

The pair of yokes 54, 56 cooperate to circumscribe a convex space within which the two shells 50, 52 are arranged. In the exemplary embodiment, the yokes 54, 56 cooperate to cover all of the outer edges of the shells 50, 54, while the top and bottom arm portions project over at least a portion of the top and bottom edges of the shells 50, 52. This provides advantages in protecting the shells 50, 52 and the measuring head 22 from damage during transportation and operation. In other embodiments, the yokes 54, 56 may include additional features, such as handles to facilitate the carrying of the laser scanner 20 or attachment points for accessories for example.

On top of the traverse 44, a prism 60 is provided. The prism extends parallel to the walls 46, 48. In the exemplary embodiment, the prism 60 is integrally formed as part of the carrying structure 42. In other embodiments, the prism 60 is a separate component that is coupled to the traverse 44. When the mirror 26 rotates, during each rotation the mirror 26 directs the emitted light beam 30 onto the traverse 44 and the prism 60. Due to non-linearities in the electronic components, for example in the light receiver 36, the measured distances d may depend on signal strength, which may be measured in optical power entering the scanner or optical power entering optical detectors within the light receiver 36, for example. In an embodiment, a distance correction is stored in the scanner as a function (possibly a nonlinear function) of distance to a measured point and optical power (generally unscaled quantity of light power sometimes referred to as "brightness") returned from the measured point and sent to an optical detector in the light receiver 36. Since the prism 60 is at a known distance from the gimbal point 27, the measured optical power level of light reflected by the prism 60 may be used to correct distance measurements for other measured points, thereby allowing for compensation to correct for the effects of environmental variables such as temperature. In the exemplary embodiment, the resulting correction of distance is performed by the controller 38.

In an embodiment, the base 24 is coupled to a swivel assembly (not shown) such as that described in commonly owned U.S. Patent No. 8,705,012 ('012), which is incorporated by reference herein. The swivel assembly is housed within the carrying structure 42 and includes a motor 138 that is configured to rotate the measuring head 22 about the axis 23. In an embodiment, the angular/rotational position of the measuring head 22 about the axis 23 is measured by angular encoder 134.

An auxiliary image acquisition device 66 may be a device that captures and measures a parameter associated with the scanned area or the scanned object and provides a signal representing the measured quantities over an image acquisition area. The auxiliary image acquisition device 66 may be, but is not limited to, a pyrometer, a thermal imager, an ionizing radiation detector, or a millimeter-wave detector. In an embodiment, the auxiliary image acquisition device 66 is a color camera.

In an embodiment, a central color camera (first image acquisition device) 112 is located internally to the scanner and may have the same optical axis as the 3D scanner device. In this embodiment, the first image acquisition device 112 is integrated into the measuring head 22 and arranged to acquire images along the same optical pathway as emitted light beam 30 and reflected light beam 32. In this embodiment, the light from the light emitter 28 reflects off a fixed mirror 116 and travels to dichroic beam-splitter 118 that reflects the light 117 from the light emitter 28 onto the rotary mirror 26. In an embodiment, the mirror 26 is rotated by a motor 136 and the angular/rotational position of the mirror is measured by angular encoder 134. The dichroic beam-splitter 118 allows light to pass through at wavelengths different than the wavelength of light 117. For example, the light emitter 28 may be a near infrared laser light (for example, light at wavelengths of 780 nm or 1250 nm), with the dichroic beam-splitter 118 configured to reflect the infrared laser light while allowing visible light (e.g., wavelengths of 400 to 700 nm) to transmit through. In other embodiments, the determination of whether the light passes through the beam-splitter 118 or is reflected depends on the polarization of the light. The digital camera 112 obtains 2D images of the scanned area to capture color data to add to the scanned image. In the case of a built-in color camera having an optical axis coincident with that of the 3D scanning device, the direction of the camera view may be easily obtained by simply adjusting the steering mechanisms of the scanner - for example, by adjusting the azimuth angle about the axis 23 and by steering the mirror 26 about the axis 25.

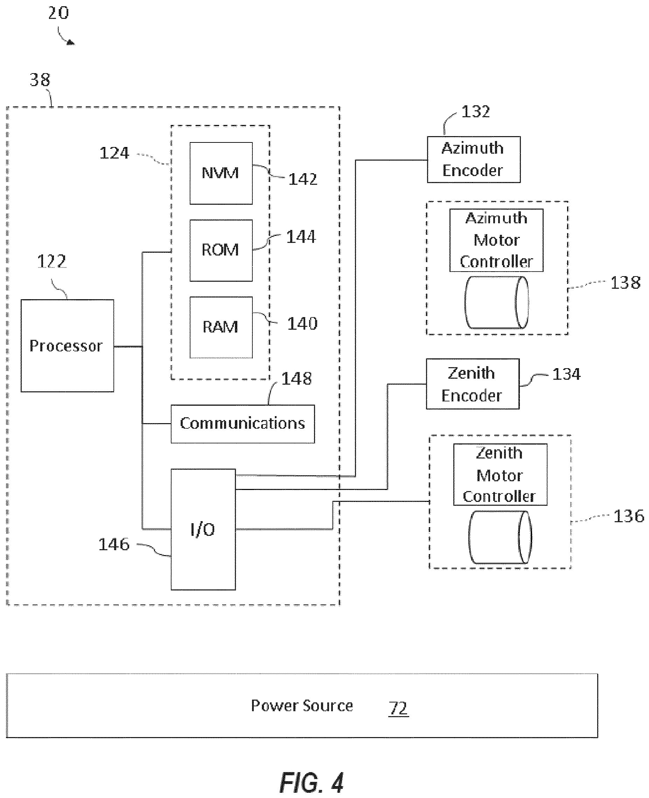

Referring now to FIG. 4 with continuing reference to FIGS. 1-3, elements are shown of the laser scanner 20. Controller 38 is a suitable electronic device capable of accepting data and instructions, executing the instructions to process the data, and presenting the results. The controller 38 includes one or more processing elements 122. The processors may be microprocessors, field programmable gate arrays (FPGAs), digital signal processors (DSPs), and generally any device capable of performing computing functions. The one or more processors 122 have access to memory 124 for storing information.

Controller 38 is capable of converting the analog voltage or current level provided by light receiver 36 into a digital signal to determine a distance from the laser scanner 20 to an object in the environment. Controller 38 uses the digital signals that act as input to various processes for controlling the laser scanner 20. The digital signals represent one or more laser scanner 20 data including but not limited to distance to an object, images of the environment, images acquired by panoramic camera 126, angular/rotational measurements by a first or azimuth encoder 132, and angular/rotational measurements by a second axis or zenith encoder 134.

In general, controller 38 accepts data from encoders 132, 134, light receiver 36, light source 28, and panoramic camera 126 and is given certain instructions for the purpose of generating a 3D point cloud of a scanned environment. Controller 38 provides operating signals to the light source 28, light receiver 36, panoramic camera 126, zenith motor 136 and azimuth motor 138. The controller 38 compares the operational parameters to predetermined variances and if the predetermined variance is exceeded, generates a signal that alerts an operator to a condition. The data received by the controller 38 may be displayed on a user interface 40 coupled to controller 38. The user interface 40 may be one or more LEDs (light-emitting diodes) 82, an LCD (liquid-crystal diode) display, a CRT (cathode ray tube) display, a touch-screen display or the like. A keypad may also be coupled to the user interface for providing data input to controller 38. In one embodiment, the user interface is arranged or executed on a mobile computing device that is coupled for communication, such as via a wired or wireless communications medium (e.g. Ethernet, serial, USB, Bluetooth^{™} or WiFi) for example, to the laser scanner 20.

The controller 38 may also be coupled to external computer networks such as a local area network (LAN) and the Internet. A LAN interconnects one or more remote computers, which are configured to communicate with controller 38 using a well- known computer communications protocol such as TCP/IP (Transmission Control Protocol/Internet Protocol), RS-232, ModBus, and the like. Additional systems may also be connected to LAN with the controllers 38 in each of these systems being configured to send and receive data to and from remote computers and other systems. The LAN may be connected to the Internet. This connection allows controller 38 to communicate with one or more remote computers connected to the Internet.

The processors 122 are coupled to memory 124. The memory 124 may include random access memory (RAM) device 140, a non-volatile memory (NVM) device 142, and a read-only memory (ROM) device 144. In addition, the processors 122 may be connected to one or more input/output (I/O) controllers 146 and a communications circuit 148. In an embodiment, the communications circuit 92 provides an interface that allows wireless or wired communication with one or more external devices or networks, such as the LAN discussed above.

Controller 38 includes operation control methods embodied in application code (e.g., program instructions executable by a processor to cause the processor to perform operations). These methods are embodied in computer instructions written to be executed by processors 122, typically in the form of software. The software can be encoded in any language, including, but not limited to, assembly language, VHDL (Verilog Hardware Description Language), VHSIC HDL (Very High Speed IC Hardware Description Language), Fortran (formula translation), C, C++, C#, Objective-C, Visual C++, Java, ALGOL (algorithmic language), BASIC (beginners allpurpose symbolic instruction code), visual BASIC, ActiveX, HTML (HyperText Markup Language), Python, Ruby and any combination or derivative of at least one of the foregoing.

One or more 3D coordinate measurement devices, such as laser scanners, can be used to captured 3D coordinate data about an environment. The 3D coordinate data can be used in various ways and/or presented on a device, such as a smartphone, tablet, heads-up display, etc., as a graphical representation. For example, the 3D coordinate data can be used to generate a point cloud that represents the environment. In some cases, a 3D coordinate measurement device captures 3D coordinate data at different locations throughout an environment. In such cases, the 3D coordinate data from the different locations is registered. Registration is the process of aligning multiple scans in a parent coordinate system using reference positions common between scans. References are common points between scans that are used to create a "best-fit" alignment, for example, or other suitable alignment between multiple scans.

Conventional approaches to registration involve using the 3D coordinate data (the captured points) to perform registration. For example, conventional approaches can involve using a cloud-to-cloud registration technique, a target-based registration technique, a subsampled top-down registration technique, and/or the like, including combinations and/or multiples thereof. These approaches can be time consuming for projects with many scans. Sometimes, it is not possible to automate registration for all scan projects, and manual steps are involved to register larger scan projects. This often has to do with the fact that scans are initially not located next to each other, as the scanner position may not be tracked between scan locations in some cases. If automatic registration fails, it is up to a user to place scans (roughly) correct to support the automated registration techniques. Further, there may not be a filter / parameter set that provides optimal registration results for different kinds of noise that may be present in the 3D coordinate data. Further, depending on the time and resources available, the optimal configuration for registration might not even be found.

Accordingly, one or more embodiments described herein provide for image-based scan pre-registration of 3D coordinate data. According to examples, this approach utilizes panoramic images that are captured with each scan. For example, for each scan, instead of capturing 3D coordinate data first and the images second, the images are captured first and then used to perform a pre-registration with a prior scan. Consider the following example. A first image (or set of images) is captured at a first location of an environment, and then first 3D coordinate data of the environment is captured by a 3D coordinate measurement device at the first location. The 3D coordinate measurement device is then moved to a second location, and a second image (or set of images) is captured at the second location. It can then be determined whether a correspondence exists between the first image and the second image based on features of the first image and the second image. Where a correspondence is found to exist, second 3D coordinate data is then captured by the 3D coordinate measurement device at the second location. Where a correspondence is not found to exist, the 3D coordinate measurement device can be moved to another (third) location, and the process can repeat until a correspondence is found. With this approach, it could be determined whether scans have enough overlap to be properly registered to each other before the second scan is even performed, thus saving time and processing resources.

The techniques described herein provide one or more advantages over the prior art. For example, one or more embodiments described herein improve control of devices (e.g., machinery, automated guided vehicles, cranes, scissor lifts, etc.) in an environment to avoid colliding with an object of interest. One or more embodiments described herein can generate a point cloud-defined boundary based on 3D coordinate data, such as data captured by a 3D coordinate measurement device and then use the point cloud-defined boundary as a "no-go" zone around an object of interest. The point cloud-defined boundary is used to control one or more devices in the environment in proximity to the object of interest.

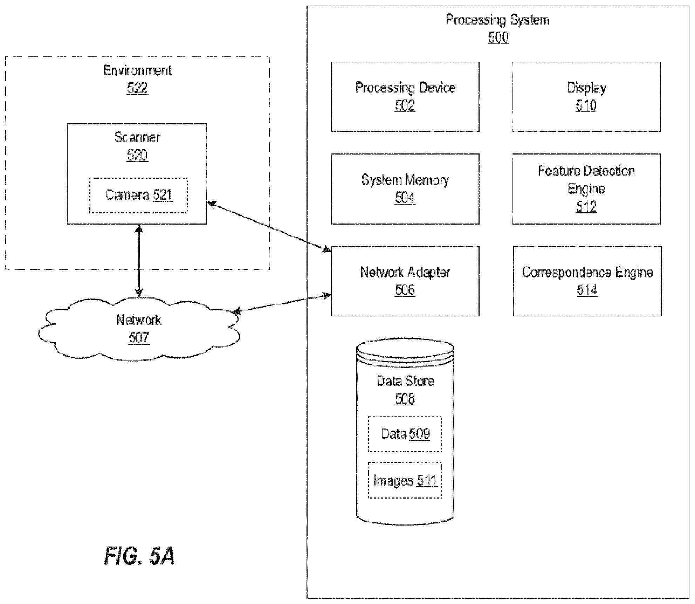

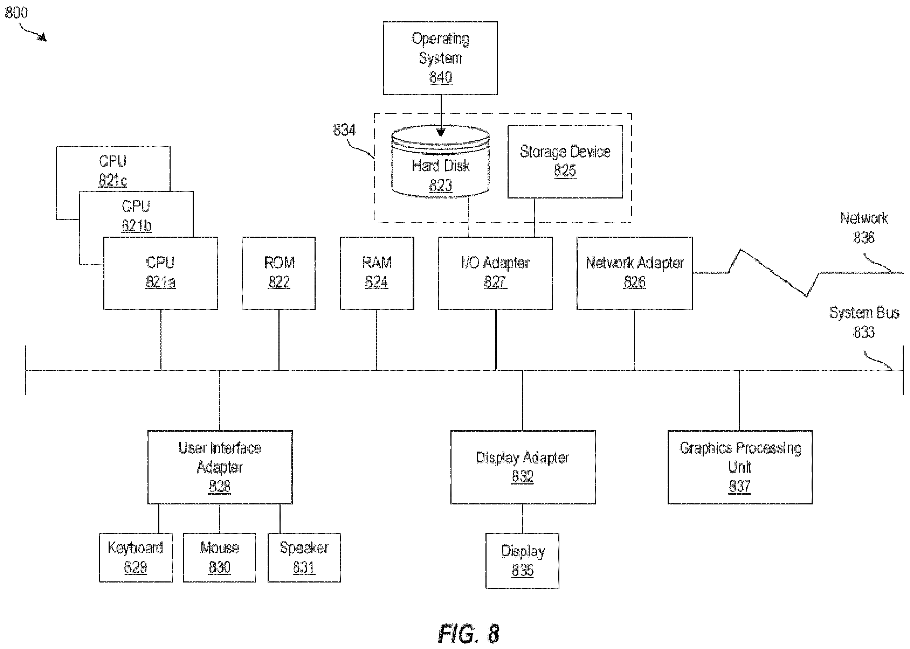

FIG. 5A is a schematic illustration of a processing system 500 for image-based scan pre-registration of 3D coordinate data according to one or more embodiments described herein. The processing system 500 includes a processing device 502 (e.g., one or more of the processing devices 821 of FIG. 8), a system memory 504 (e.g., the RAM 824 and/or the ROM 822 of FIG. 8), a network adapter 506 (e.g., the network adapter 826 of FIG. 12), a data store 508, a display 510, a feature detection engine 512, and a correspondence engine 514.

The various components, modules, engines, etc. described regarding FIG. 5A (e.g., the feature detection engine 512, the correspondence engine 514) can be implemented as instructions stored on a computer-readable storage medium, as hardware modules, as special-purpose hardware (e.g., application specific hardware, application specific integrated circuits (ASICs), application specific special processors (ASSPs), field programmable gate arrays (FPGAs), as embedded controllers, hardwired circuitry, etc.), or as some combination or combinations of these. According to aspects of the present disclosure, the engine(s) described herein can be a combination of hardware and programming. The programming can be processor executable instructions stored on a tangible memory, and the hardware can include the processing device 502 for executing those instructions. Thus, the system memory 504 can store program instructions that when executed by the processing device 502 implement the engines described herein. Other engines can also be utilized to include other features and functionality described in other examples herein.

In one or more embodiments, one or more of the components of the processing system 500 itself can be implemented using distributed or cloud computing techniques. For example, a cloud computing system can be in wired or wireless electronic communication with one or more of the elements of the processing system 500. Cloud computing can supplement, support or replace some or all of the functionality of the elements of the processing system 500. Additionally, some or all of the functionality of the elements of the processing system 500 (e.g., the feature detection engine 512, the correspondence engine 514) can be implemented as a node of a cloud computing system. A cloud computing node is only one example of a suitable cloud computing node and is not intended to suggest any limitation as to the scope of use or functionality of embodiments described herein. For example, the network 507 can be a cloud network. According to one or more embodiments described herein, edge computing can be implemented, such that one or more edge devices can perform one or more of the features and/or functions of the processing system 500. For example, the scanner 520 can be an edge processing device, which can perform processing on 3D coordinate data that the scanner 520 collect (e.g., one or more of the scanner 520 can perform image-based scan pre-registration).

The network adapter 506 enables the processing system 500 to transmit data and/or images to and/or receive data and/or images from other sources, such as the scanner 520. For example, the processing system 500 receives data (e.g., a data set that includes a plurality of three-dimensional coordinates of an environment 522) from the scanner 520 directly and/or via a network 507. Similarly, the processing system 500 receives images (e.g., a single image, a set of images, a panoramic image) from the camera 521 associated with the scanner 520. The data and the images from the scanner 520 can be stored in the data store 508 of the processing system 500 as, respectively, data 509 (e.g., used to generate a point cloud) and as images 511 (used to perform feature detection and correspondence).

The network 507 represents any one or a combination of different types of suitable communications networks such as, for example, cable networks, public networks (e.g., the Internet), private networks, wireless networks, cellular networks, or any other suitable private and/or public networks. Further, the network 507 can have any suitable communication range associated therewith and may include, for example, global networks (e.g., the Internet), metropolitan area networks (MANs), wide area networks (WANs), local area networks (LANs), or personal area networks (PANs). In addition, the network 507 can include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, satellite communication mediums, or any combination thereof.

The scanner 520 (e.g., a laser scanner, such as the laser scanner 20) can be arranged on, in, and/or around the environment 522 to scan the environment 522. It should be appreciated that while embodiments herein refer to a 3D coordinate measurement device as a laser scanner (e.g., the scanner 520), this is for example purposes and the claims should not be so limited. In other embodiments, other types of optical or 3D coordinate measurement devices may be used, such as but not limited to triangulation scanners, structured light scanners, photogrammetry devices, mobile mapping devices, LIDAR devices, and/or the like, including combinations and/or multiples thereof, for example.

According to one or more embodiments described herein, the scanner 520 can include a scanner processing system including a scanner controller, a housing, and a 3D scanner. The 3D scanner can be disposed within the housing and operably coupled to the scanner processing system. The 3D scanner includes a light source, a beam steering unit, a first angle measuring device, a second angle measuring device, and a light receiver. The beam steering unit cooperates with the light source and the light receiver to define a scan area. The light source and the light receiver are configured to cooperate with the scanner processing system to determine a first distance to a first object point based at least in part on a transmitting of a light by the light source and a receiving of a reflected light by the light receiver. The 3D scanner is further configured to cooperate with the scanner processing system to determine 3D coordinates of the first object point based at least in part on the first distance, a first angle of rotation, and a second angle of rotation. According to one or more embodiments described herein, the processing system 500 can automatically trigger the scanner 520 to cause the triggered scanner to initiate a scan to capture the 3D coordinate data. As an example, multiple scanners can be triggered simultaneously to cause simultaneous scanning.

The scanner 520 performs at least one scan to generate a data set that includes a plurality of three-dimensional coordinates of the environment 522 within the environment 522. The data set can be transmitted, directly or indirectly (such as via the network 507) to a processing system (such as the processing system 500), which can store the data set as the data 509 in the data store 508. It should be appreciated that other numbers of scanners (e.g., one scanner, two scanners, three scanners, four scanners, six scanners, eight scanners, twelve scanners, etc.) can be used.

According to one or more embodiments described herein, the scanner 520 can be used to take multiple scans. For example, the scanner 520 can capture first 3D coordinate data at a first location and then be moved to a second location, where the scanner 520 captures second scan data. It is useful to register the first 3D coordinate data with the second 3D coordinate data. However, because the scan process is time consuming, the techniques described herein provide for performing image-based scan pre-registration of 3D coordinate data using captured images. For example, the scanner 520 can include or otherwise be associated with a camera 521. The camera 521 can be integrally formed with the scanner 520, can be physically coupled to the scanner 520, and/or can be separate from the scanner 520 in various embodiments. The camera 521 captures images of the environment 522 and transmits the images to the processing system 500, which can store the images as images 511 in the data store 508. The images 511 are used for scan pre-registration. For example, the feature detection engine 512 detects features in the images, and the correspondence engine 514 determines whether a correspondence exists between images captured at two different locations within the environment 522. Where correspondences exist, scans at the two locations can be performed with confidence that later registration can be achieved.

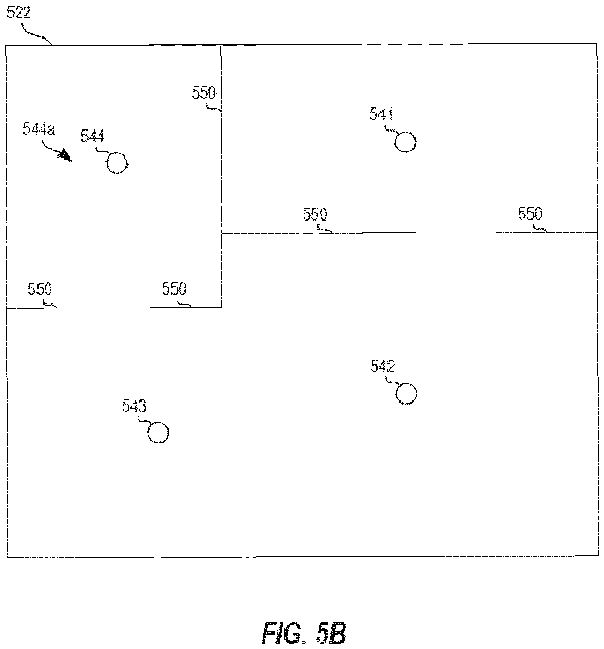

FIG. 5B is a schematic illustration of the environment 522 of FIG. 5A according to one or more embodiments described herein. In this example, four scan locations 541, 542, 543, 544 are shown. As can be observed, the environment includes obstacles, such as walls 550, objects (not shown), and/or the like, which can block portions of the environment from being scanned by the scanner 520 at certain locations. For example, the area 544a around the scan location 544 cannot be captured by the scanner 520 when the scanner 520 is positioned at the scan location 541, and thus registration between two scans taken at the scan locations 541, 544 would not be possible. Scan pre-registration avoids this situation by capturing images at a scan location before performing a scan at that location to determine whether the location is suitable by performing pre-registration using the images instead of scan data. For example, according to one or more embodiments described herein, the scanner 520 with associated camera 521 is positioned at the scan location 541; a first image is captured, then a first scan is performed to capture first 3D coordinate data. The scanner 520 with associated camera 521 is then moved to another scan location (e.g., the scan location 542), and a second image is captured. The processing system 500 performs feature detection on the first image and the second image, using the feature detection engine 512. Features are then compared between the images by the correspondence engine 514 to determine whether a correspondence exists. A correspondence can be said to exist when, for example, a certain number of features is common between the first and second images. If a correspondence is found, the scanner 520 can perform a second scan to capture second 3D coordinate data at the scan location 542. However, if the scanner is moved from the scan location 541 to a scan location where correspondence is not found (e.g., the scan location 544), another suitable location can be determined by the user before the second scan is performed, thus saving time and processing (e.g., scanner) resources.

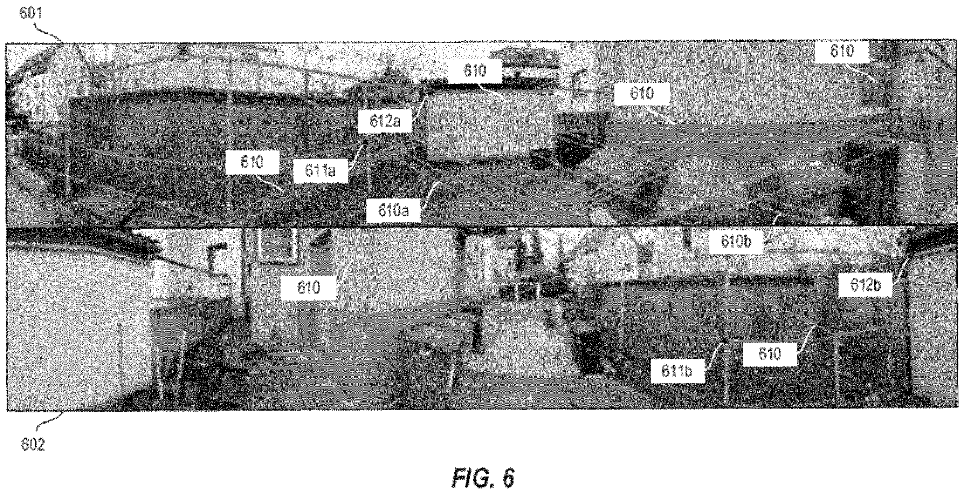

FIG. 6 depicts images 601, 602 for image-based scan pre-registration according to one or more embodiments described herein. The image 601 represents a first image, such as a panoramic image, captured at a first location of an environment. The image 602 represents a second image, such as a panoramic image, captured at a second location of an environment. The feature detection engine 512 of the processing system 500 performs feature detection on the images 601, 602 to detect features. Features, such as points, edges, objects, curves, surfaces, etc. are detected in the images 601, 602. Feature detection can be performed using one or more feature detect techniques, such as a Harris corner approach, a scale invariant feature transform (SIFT) approach, a speeded up robust feature (SURF) approach, a features from accelerated segment test (FAST) approach, and/or the like.

Once the features are detected, the correspondence engine 514 attempts to match features between images (e.g., the images 601, 602). As an example, to perform the matching (or correspondence evaluation), the correspondence engine 514 defines a region around each detected feature, extracts and normalizes content in each region, computes a local description from the normalized region, and matches local descriptors. In the example of FIG. 6, the lines 610 represent some of the matched features between the images 601, 602. For example, the line 610a shows the matching of a feature 611a of the image 601 with a feature 611b of the image 602. That is, the features 611a, 611b are the same feature in the two different images, namely images 601, 602. Similarly, the line 610b shows the matching of a feature 612a of the image 601 with a feature 612b of the image 602. The features 612a, 612b are the same feature in the two different images, namely images 601, 602.

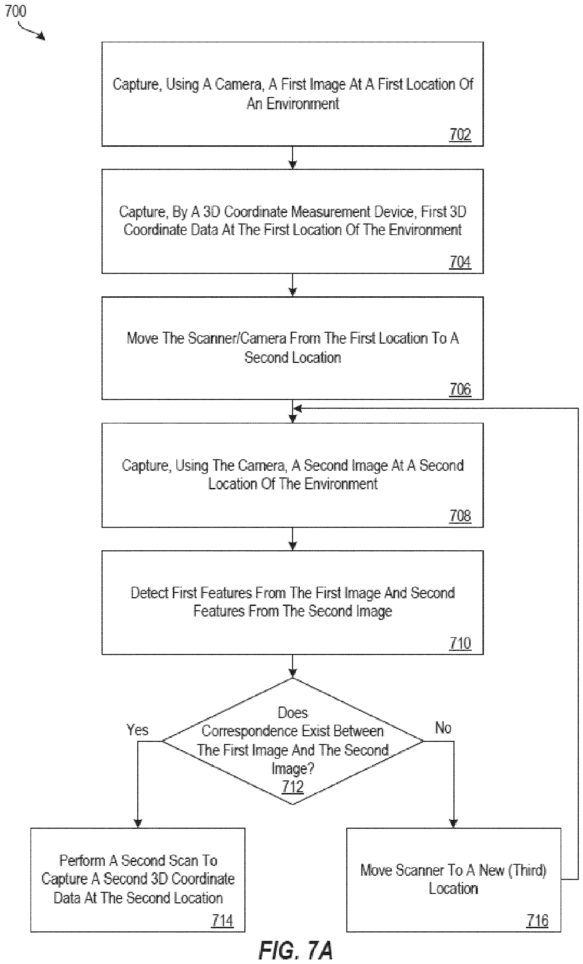

FIG. 7A is a flow diagram of a method 700 for image-based scan pre-registration according to one or more embodiments described herein. The method 700 can be performed by any suitable system or device, such as the processing system 500 of FIG. 5A and/or the processing system 800 of FIG. 8.

At block 702, a camera (e.g., the camera 521) captures a first image at a first location (e.g., the scan location 541) of an environment (e.g., the environment 522). At block 704, a 3D coordinate measurement device (e.g., the scanner 520) captures first 3D coordinate data at the first location of the environment. In an example, the first image is captured before the first 3D coordinate data is captured; however, in another example, the first 3D coordinate data is captured before the first image is captured. The first image and the first 3D coordinate data are transmitted to a processing system (e.g., the processing system 500), for example. The scanner with associated camera (e.g., the scanner 520 with the camera 521) are moved from the first location of the environment to a second location (e.g., the scan location 542) at block 706. At block 708, the camera captures a second image at a second location of the environment, and the second image is transmitted to the processing system.

At block 710, the processing system 500, using the feature detection engine 512, detects first features in the first image and second features in the second image, such as using one or more feature detection techniques as described herein. At decision block 712, the processing system 500, using the correspondence engine 514, determines whether a correspondence exists between the first image and the second image. That is, the correspondence engine 514 attempts to match features between the first image and the second image as described herein. A correspondence can be said to exist when, for example, a certain number (e.g., a threshold) of features is common between the first and second images. As another example, a correspondence can be said to exist when a certain percentage (e.g., 10%, 20%, 33%, 50%, etc.) of the first image and the second image overlap. As another example, a correspondence can be said to exist when an angular difference between the first image and the second image is met (e.g., an angular difference between the first image and the second image is less than 10 degrees, less than 20 degrees, less than 33 degrees, less than 50 degrees, less than 80 degrees, less than 110 degrees, etc.) If a correspondence is found at decision block 712, the method 700 proceeds to block 714 and the scanner 520 can perform a second scan to capture second 3D coordinate data at second location.

However, if no correspondence is found at decision block 712, the method 700 proceeds to block 716, and the scanner with camera is moved to a new (third) location. The method 700 can then iteratively evaluate the new (third and/or any subsequent) location. For example, responsive to determining that the correspondence does not exist between the first image and the second image at decision block 712, the method 700 receives, from the camera, a third image captured at third location of the environment, and the processing system 500 detects third features of the third image. Using the third image, the processing system 500 then determines whether a correspondence exists between the first image and the third image. If so, the processing system 500 causes the 3D coordinate measurement device to capture, at the third location, third 3D coordinate data.

According to one or more embodiments described herein, registration is performed on the first 3D coordinate data and the second 3D coordinate data after both are captured and received. Registration is more likely to be successful subsequent to performing the method 700 because the scan pre-registration helps ensure that the first and second 3D coordinate data have sufficient overlap to perform the registration.

According to one or more embodiments described herein, the first and second images are two-dimensional (2D) images. However, in other examples, the first and second images are 3D images.

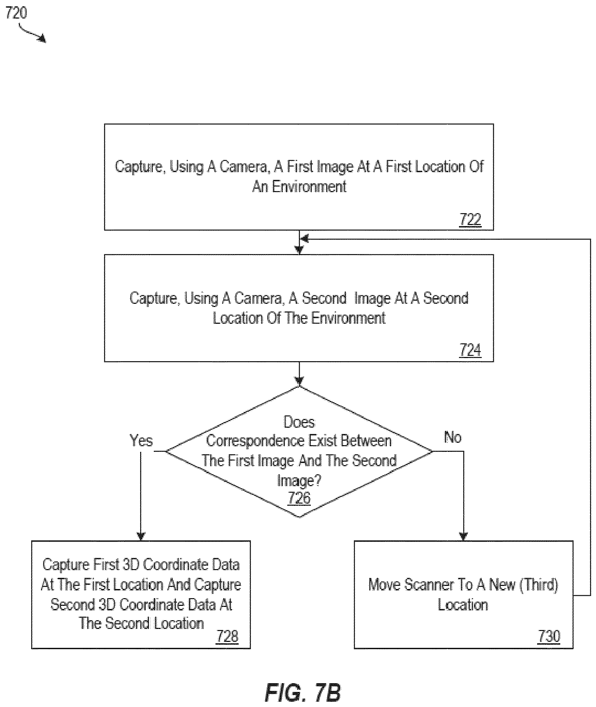

FIG. 7B is a flow diagram of a method 720 for image-based scan pre-registration according to one or more embodiments described herein. The method 720 can be performed by any suitable system or device, such as the processing system 500 of FIG. 5A and/or the processing system 800 of FIG. 8.

At block 722, the camera 521 captures a first image (e.g., the image 601) at a first location (e.g., the scan location 541) of an environment (e.g., the environment 522). At block 724, the camera 521 captures a second image (e.g., the image 602) at a second location (e.g., the scan location 542) of the environment.

At block 726, using the first image and the second image, the processing system 500, using the feature detection engine 512, detects features of the first image and the second image. At decision block 728, the processing system 500 determines whether a correspondence exists between the first image and the second image based at least in part on the detected features. If at decision block 728 it is determined that a correspondence exists, 3D coordinate data is captured at the first and second locations. That is, the scanner 520 captures, at the first location, first 3D coordinate data and captures, at the second location, second 3D coordinate data. If, at decision block 728, it is determined that a correspondence does not exist, the scanner can be moved to a new (third) location, and the method 720 can continue as shown.

Additional processes also may be included, and it should be understood that the process depicted in FIGS. 7A and 7B represents an illustration, and that other processes may be added or existing processes may be removed, modified, or rearranged without departing from the scope of the present disclosure.

It is understood that one or more embodiments described herein is capable of being implemented in conjunction with any other type of computing environment now known or later developed. For example, FIG. 8 depicts a block diagram of a processing system 800 for implementing the techniques described herein. In accordance with one or more embodiments described herein, the processing system 800 is an example of a cloud computing node of a cloud computing environment. In examples, processing system 800 has one or more central processing units ("processors" or "processing resources" or "processing devices") 821a, 821b, 821c, etc. (collectively or generically referred to as processor(s) 821 and/or as processing device(s)). In aspects of the present disclosure, each processor 821 can include a reduced instruction set computer (RISC) microprocessor. Processors 821 are coupled to system memory (e.g., random access memory (RAM) 824) and various other components via a system bus 833. Read only memory (ROM) 822 is coupled to system bus 833 and may include a basic input/output system (BIOS), which controls certain basic functions of processing system 800.

Further depicted are an input/output (I/O) adapter 827 and a network adapter 826 coupled to system bus 833. I/O adapter 827 may be a small computer system interface (SCSI) adapter that communicates with a hard disk 823 and/or a storage device 825 or any other similar component. I/O adapter 827, hard disk 823, and storage device 825 are collectively referred to herein as mass storage 834. Operating system 840 for execution on processing system 800 may be stored in mass storage 834. The network adapter 826 interconnects system bus 833 with an outside network 836 enabling processing system 800 to communicate with other such systems.

A display (e.g., a display monitor) 835 is connected to system bus 833 by display adapter 832, which may include a graphics adapter to improve the performance of graphics intensive applications and a video controller. In one aspect of the present disclosure, adapters 826, 827, and/or 832 may be connected to one or more I/O busses that are connected to system bus 833 via an intermediate bus bridge (not shown). Suitable I/O buses for connecting peripheral devices such as hard disk controllers, network adapters, and graphics adapters typically include common protocols, such as the Peripheral Component Interconnect (PCI). Additional input/output devices are shown as connected to system bus 833 via user interface adapter 828 and display adapter 832. A keyboard 829, mouse 830, and speaker 831 may be interconnected to system bus 833 via user interface adapter 828, which may include, for example, a Super I/O chip integrating multiple device adapters into a single integrated circuit.

In some aspects of the present disclosure, processing system 800 includes a graphics processing unit 837. Graphics processing unit 837 is a specialized electronic circuit designed to manipulate and alter memory to accelerate the creation of images in a frame buffer intended for output to a display. In general, graphics processing unit 837 is very efficient at manipulating computer graphics and image processing, and has a highly parallel structure that makes it more effective than general-purpose CPUs for algorithms where processing of large blocks of data is done in parallel.

Thus, as configured herein, processing system 800 includes processing capability in the form of processors 821, storage capability including system memory (e.g., RAM 824), and mass storage 834, input means such as keyboard 829 and mouse 830, and output capability including speaker 831 and display 835. In some aspects of the present disclosure, a portion of system memory (e.g., RAM 824) and mass storage 834 collectively store the operating system 840 to coordinate the functions of the various components shown in processing system 800.

It will be appreciated that one or more embodiments described herein may be embodied as a system, method, or computer program product and may take the form of a hardware embodiment, a software embodiment (including firmware, resident software, micro-code, etc.), or a combination thereof. Furthermore, one or more embodiments described herein may take the form of a computer program product embodied in one or more computer readable medium(s) having computer readable program code embodied thereon.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the spirit and scope of the disclosure. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

## Claims

1. A method comprising:
receiving, from a camera, a first image captured at a first location of an environment;
receiving, by a three-dimensional (3D) coordinate measurement device, first 3D coordinate data captured at the first location of the environment;
receiving, from the camera, a second image captured at a second location of the environment;
detecting, by a processing system, first features of the first image and second features of the second image;
determining, by the processing system, whether a correspondence exists between the first image and the second image; and
responsive to determining that the correspondence exists between the first image and the second image, causing the 3D coordinate measurement device to capture, at the second location, second 3D coordinate data.

2. The method of claim 1, further comprising:
responsive to determining that the correspondence does not exist between the first image and the second image:
receiving, from the camera, a third image captured at third location of the environment;
detecting, by the processing system, third features of the third image;
determining, by the processing system, whether a correspondence exists between the first image and the third image; and
responsive to determining that the correspondence exists between the first image and the third image, causing the 3D coordinate measurement device to capture, at the third location, third 3D coordinate data.

3. The method of claim 1, wherein the 3D coordinate measurement device is a laser scanner.

4. The method of claim 1, wherein the first 3D coordinate data is captured prior to capturing the first image.

5. The method of claim 1, wherein the second 3D coordinate data is captured subsequent to capturing the second image.

6. The method of claim 1, wherein the first 3D coordinate data is captured prior to capturing the first image and wherein the second 3D coordinate data is captured subsequent to capturing the second image.

7. The method of claim 1, further comprising, subsequent to receiving the first 3D coordinate data and the second 3D coordinate data, performing registration on the first 3D coordinate data and the second 3D coordinate data.

8. The method of claim 1, wherein the 3D coordinate measurement device comprises the camera.

9. The method of claim 1, wherein the camera is a panoramic camera.

10. The method of claim 1, wherein the first image and the second image are two-dimensional (2D) images.

11. The method of claim 1, wherein the first image and the second image are 3D images.

12. The method of claim 1, wherein the camera and the 3D coordinate measurement device are disposed in a body.

13. The method of claim 1, wherein the camera is disposed in a first body and wherein the 3D coordinate measurement device is disposed in a second body separate from the first body.

14. The method of claim 13, wherein the first body is connected to the second body.

15. The method of claim 1, wherein determining the correspondence is based at least in part on one of a threshold number of detected features, a percentage of overlap between the first image and the second image, or an angular difference between the first image and the second image.
